# EUROPEAN PATENT SPECIFICATION

(11) **EP 1 701 881 B1**
(45) Date of publication and mention of the grant of the patent: **04.03.2009**
(21) Application number: 05700701.5
(22) Date of filing: 05.01.2005
(51) Int. Cl.: B64C 1/40, B64C 1/00, A62C 3/08

(54) **AIRCRAFT FUSELAGE**
FLUGZEUGRUMPF
FUSELAGE

(30) Priority: 05.01.2004 DE 102004001078; 09.08.2004 US 600105 P
(43) Date of publication of application: 20.09.2006
(73) Proprietor: Airbus Deutschland GmbH, 21129 Hamburg (DE)
(72) Inventor: MÜLLER, Rainer, 21224 Rosengarten (DE); TURANSKI, Peter, 27305 Süstedt (DE); OESTEREICH, Wilko, 28857 Syke-Barrien (DE); REINELT, Thorsten, 28205 Bremen (DE)
(74) Representative: Dilg, Andreas
(86) International application number: PCT/EP2005/000038
(87) International publication number: WO 2005/068289

(56) References cited:
- EP-A- 0 475 677
- EP-A- 1 164 006
- DE-A1- 4 417 889
- DE-U1- 20 220 600
- GB-A- 919 839
- US-A- 2 945 653
- US-A- 4 310 132
- US-A- 5 051 300
- US-A- 5 154 373
- US-A- 6 114 050
- US-A1- 2002 017 590
- US-A1- 2003 080 251
- US-B1- 6 286 785

## Description

### FIELD OF THE INVENTION

The invention relates to a fuselage in particular of a commercial aircraft

### BACKGROUND OF THE INVENTION

In the past, aluminium structures were highly successful in aircraft construction. Without going any further into detail on this matter, any expert, and most likely even a layman enthusiast interested in aircraft construction, knows that the traditional structural design of a fuselage involves an outer fuselage skin made solely of aluminium or aluminium alloys. Prior art provides the relevant examples for this.

There are accidents that were regrettably traced back to fires caused by kerosene leaking from an aircraft that had performed an emergency landing. Due to this, there mary be a need for an aircraft having an improved fire protection.

In the event of a fire started during an emergency belly landing of an aircraft, (ignited) burning kerosene leaking from the aircraft may cause both the aluminium airframe of the aircraft structure and the interior insulation to burn through or away.

Publication "WO 00/75012 A1" discloses a solution with which any outbreak of fire can be countered in the emergency situation described. This solution relates to fuselage insulation for one aircraft fuselage referred to as "fire-resistant". This publication discloses an insulating package lying inside an expanse between the interior fuselage cladding and exterior fuselage skin as a primary insulation. Areas of this insulation package are here protected by a film consisting of fire-resistant material ("fire blocking material"), wherein this fire-resistant film area directly faces the exterior skin of the aircraft fuselage (like a fire protection shield). In addition to the fact that this proposal can only provide inadequate protection of the insulation package and the interior fuselage area against fires, since given a catastrophic fire, the flames from the fire that pass precisely from outside the aircraft through a damaged exterior skin and approach the interior insulation a short time later, i.e., also pass through the (only) fire-resistant, but not fireproof film given prolonged exposure to fire, the intended area-by-area arrangement of a merely fire-resistant film would be unable to ensure a sufficient level of fire safety relative to the interior fuselage area. The publication also proposes corresponding attachment elements for securing the fuselage insulation, which most often consist ofplastic(s), e.g., a polyamide.

US 6,286,785 B1 describes an improvement to the existing aircraft structure by reinforcing the fuselage frame aluminium skin. The aluminium skin comprises an aluminium skin, a jacket and a metal external panelling that are glued together in layers by an adhesive. The jackets may consist of Kevlar.

US 6,114,050 describes a titanium polymer hybrid laminate structure for supersonic civilian aircrafts. A hybrid laminate structure that is suitable for a supersonic civilian aircraft, includes lay-ups of layers of titanium alloy foil and composite plies, that are optimally orientated to counteract forces encountered in use, that are bonded to a central core structure, such as titanium alloy honeycomb. The reinforced fibres of the composite plies are selected from carbon or boron, and the fibres are continuous and parallel orientated within each ply.

The publication makes no mention of additional measures available for preventative fire protection, which are geared toward the technical design of the aircraft fuselage in terms of fire safety, and additionally aimed at the external fuselage skin.

### SUMMARY OF THE INVENTION

According to an exemplary embodiment of the present invention, an aircraft fuselage is provided, comprising an exterior skin product. The external skin product is made of a semi-finished material. The semi-finished material is a combination of a non-metallic material and a metallic material. The exterior skin product is a hybrid material that is moldable and joinable through further processing.

The fuselage according to an exemplary embodiment of the present invention is conceived in such a way as to prevent the spread of flames produced by a source of fire and acting on the fuselage from outside the aircraft environment. The fuselage concept takes into account materials or material combinations that will scarcely allow protection of the cabin area of an aircraft (upon emergency landing) to be violated by flames spreading from outside the aircraft environment, which is believed to tangibly facilitate an evacuation of passengers from the aircraft. Furthermore, it is believed that the fire safety of an outside or external fuselage skin of an aircraft fuselage may be improved in such a way as to achieve a high burn-through behavior of the skin.

### BRIEF DSCRIPTION OF THE DRAWINGS

The invention is described in greater detail with reference to an exemplary embodiment with reference to the following drawings.
- Fig. 1: shows an aircraft fuselage of a passenger aircraft depicting elements of the fuselage structure and interior equipment according to an exemplary embodiment of the present invention;
- Fig. 2: shows a selected area of the external skin and other structural elements of the fuselage structure according to an exemplary embodiment of the present invention.

### DETAILED DESCRIPTION OF EXEMPLARY EMBODIMENTS

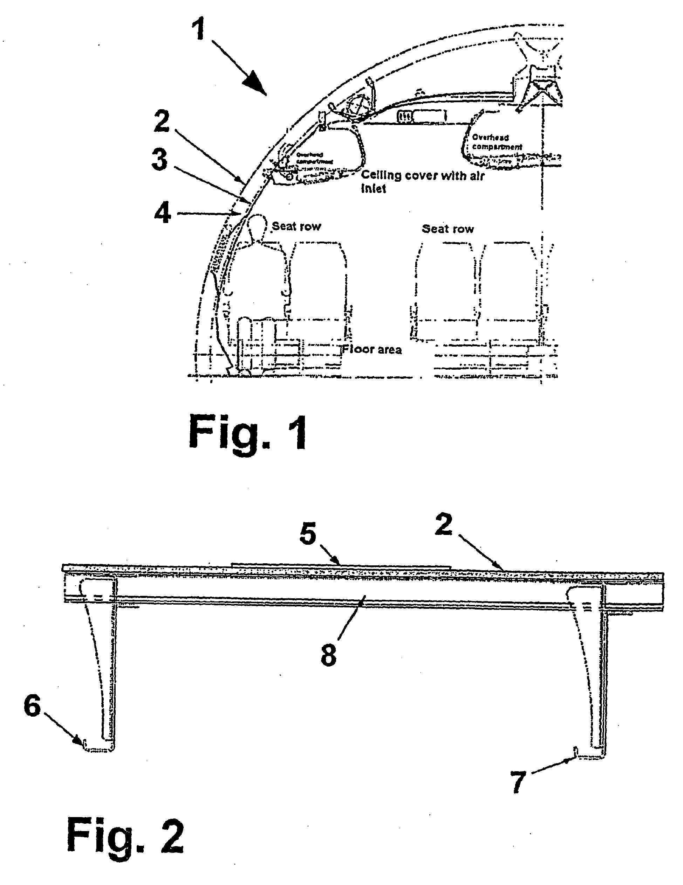

Fig. 1 shows an excerpt of a cross section of the fuselage from a passenger plane, restricted to a sectional area of an aircraft passenger cabin 1. This arrangement would likely be familiar an expert in aircraft construction, and discloses relations from which the observer may recognize that a combustible interior cladding 3 is situated very close (in terms of the fuselage) to the external skin 2, which when installed together with the exterior skin encompasses a space within which the fuselage insulation (not shown on Fig. 1) is installed. If an exterior skin 2 traditionally realized with an aluminum material or aluminum alloy is installed in this configuration, the observer will be able to weigh the extent of a catastrophic fire of the kind described at the outset. The additional parts and elements of the interior equipment and fuselage structure shown on Fig. 1 and integrated into an aircraft passenger cabin (based on the example therein) will not be described, since they are considered to be irrelevant with respect to the present invention.

Fig. 2 shows a skin field section of the exterior skin 2 that is affixed to the stringer 8. The skin field is restricted to the area of skin bordered by two ribs 6, 7 secured to the stringer, which are aligned perpendicular to the fuselage longitudinal axis. For the sake of completeness, let it be mentioned that the exterior skin 2, the stringer(s) 8 and the ribs 6, 7 are constituents of the mechanical strength bracing of the fuselage, and participate in its absorption of forces, wherein the exterior skin 2 consists of different respective materials, generally of the mentioned material "aluminum or aluminum alloy", which are designed to be resistant to shear. The exterior skin 2 is incorporates into the mechanical strength bracing as a bearing element to absorb and transfer the forces and torques acting thereupon.

It is believed that the proposed solution follows the concept of a prophylactic or preventative fire safety for an aircraft, so that an induced high burn-through behavior of the exterior skin 2 may increase the technical fire safety of a passenger or military aircraft, first and foremost of a passenger plane, so that it is believed that a fire situation of the kind described at the outset cannot develop into a catastrophe, e.g., after an aircraft has made a successful emergency landing.

It is proposed that the exterior skin 2 be realized by combining a semi-finished material comprised of a non-metallic material and a metal material. The produced exterior skin product of such a material combination is a hybrid material, which can be molded and joined through further processing. This material combination is achieved by means of a non-metallic material consisting of carbon and a metal material, wherein the metal material consists of an aluminum or a titanium or an aluminum or titanium alloy.

The desired arrangement is coated by a resin layer or imbedded in a resin. The obtained exterior skin product with this material combination has a sandwich design. This sandwich design is adhesively bonded with a composite material and the mentioned metal material in layers (films), which yields a burn-through resistant behavior of the exterior skin relative to long-term exposure to flames from a fire. In addition, the sandwich design can be realized using a glare material, whose burn-through behavior is high.

The mentioned composite material involves a heatproof composite material, whose behavior also exhibits a temperature resistance and tensile strength. This heatproof material is realized with carbon fibers, coated with material from a nitride or carbide bond, e.g., silicon carbide, silicon nitride or boron nitride, and a metal or ceramic material, into which the coated carbon fibers are imbedded.

In order to complement the concept of preventative fire safety for an aircraft, it is additionally proposed that the outer surface of the (burn-through resistant) exterior skin 2, namely the area of skin exposed to weathering from the outside environment of an aircraft, be joined with a plate-like planking 5 based on the example on Fig. 2. This planking 5 is also to be realized with the burn-through resistant semi-finished product using a non-metallic material or a fireproof metallic material. On the other hand, it is possible to realize the planking 5 with the mentioned material combination of the semi-finished product using a non-metallic material and a metal material, whose produced exterior skin product is a hybrid material, wherein the planking can also be molded and joined through further processing. The planking 5 will exhibit a fire-safe(r) behavior, and can also be molded to reflect the outer contour of the exterior skin 2. It may be realized with a GLARE material.

It is believed that an aircraft fuselage made burn-through resistant is used to achieve the highest level of safety for a passenger plane relative to fire exposure from outside. A burn-through resistant aircraft fuselage may afford optimal protection against fire entering the cabin, since it is the furthest removed from the passenger seat installed within the fuselage, and prevents flames from penetrating at their source. If the aircraft fuselage is now manufactured out of burn-through resistant materials, it may also become unnecessary to assemble burn-through resistant attachment elements for mounting an additional "fire barrier" (not discussed in any greater detail here), which is enveloped by a fuselage insulation situated in the space 4 and completely encapsulated by a burn-through resistant film made of a fireproof film material. The so-called fire barrier should function should be defined as a minimal requirement for the fuselage structure, since this requires no weight-increasing, additional components to ensure burn-through safety, although the latter will likely not be as high as would be the case with the introduced aircraft fuselage.

Advanced, truly reliably burn-through resistant aircraft can also be realized by having the exterior skin 2, which most often normally consists of an approx. 1.5 to 3 mm thick aluminum sheet, be replaced with burn-through resistant sheets of the kind introduced.

Burn-through resistant exterior skin sheets which are not according to the present invention can be realized using the following materials, for example:
a) Carbon fiber materials (CFK),
b) Glass fiber materials (GFK),
c) Fireproof metals like titanium,
d) Ceramic fiber materials, and
e) Silicate fiber materials.

The advantage to these materials is that they exhibit a clearly higher melting point than is the case for aluminum.

As a result, these materials are distinctly more resistant in cases of fire.

The different materials can be combined with each other to achieve optimal properties with respect to processing, strength, weight and burn-through behavior. Reference is then made to so-called "composite materials" or "sandwich structures". In this case, the different materials are adhesively bonded or glued to each other. A behavior in fires may be further optimized or improved by using especially temperature-resistant adhesives here.

The burn-through resistant sheets fabricated in this manner can then be riveted with the ribs 6, 7 and stringer 8, just as conventional aluminum exterior skin sheets of the aircraft.

The reinforcing elements, called the stringer 8 and ribs 6, 7, responsible for the special structural integrity of the aircraft fuselage can also be made out of conventional materials (aluminum), since they are already inwardly situated relative to the exterior skin 2 of the aircraft, and protected by the burn-through, resistant planking 5 against flames from a so-called "post-crash fire". Even so, it is possible to manufacture all other components, such as the stringer 8, ribs 6, 7 and clips, out of the same burn-through resistant material.

The following advantages to the proposed solution are believed to be achieved. In comparison to all other arrangements of a fire barrier for a passenger plane, the use of a burn-through resistant aircraft fuselage is particularly effective. No additional components are believed to be necessary, which is especially cost-effective and weight-neutral. In this case, the passenger may be protected against the propagation of flames into the cabin in comparison to all other similar solutions. Since the actual fuselage structure of the aircraft is protected against burn-through, components traditionally mounted to the aircraft airframe, e.g., the interior cladding 3 and fuselage insulation, are prevented from falling on the passengers, endangering them or impeding the evacuation.

### Reference List

- 1: Aircraft passenger cabin
- 2: Exterior skin (of aircraft fuselage)
- 3: Interior cladding
- 4: Space
- 5: Planking
- 6,7: Rib
- 8: Stringer

## Claims

1. An aircraft fuselage, which fuselage structure, in addition to other structural elements that are components of the mechanical strength bracing of the fuselage and help absorb its forces, comprising:
an exterior skin (2) consisting of various respective materials, which are designed to be resistant to shear, and incorporated as a bearing element into the mechanical strength bracing to absorb and transfer the forces and torques acting thereupon, wherein the exterior skin (2) is adapted to be molded and to be joined through further processing,
wherein the exterior skin (2) is made of a hybrid material,
wherein the hybrid material consists of a composite material and a metallic material,
wherein the metallic material consists of an aluminum or a titanium or an aluminum or titanium alloy,
wherein the composite material and the metallic material are coated by a resin layer or embedded in a resin for providing the hybrid material;
wherein the hybrid material provides a sandwich design,
wherein the metallic material and the composite material are adhesively bonded in layers in the sandwich design,
wherein the sandwich design is adapted for yielding a burn-through resistant behavior of the exterior skin relative to long-term exposure to flames from a fire;
wherein the composite material consists of a heatproof composite material,
wherein the heatproof composite material is adapted to exhibit a temperature resistance and tensile strength; and
wherein the heatproof composite material consists of carbon fibers, that are coated with a nitride or carbide bond, and a metallic or ceramic material, into which the coated carbon fibers are embedded.

2. The aircraft fuselage of claim 1, wherein the fireproof, metallic material is made of titanium or of a titanium alloy.

3. The aircraft fuselage of claim 1, wherein the outer surface of the exterior skin (2), which is exposed to weathering from the outside environment of an aircraft, is joined with a plate-like planking (5), which is realized with a burn-through resistant semi-finished product using a non-metallic material or a fireproof metallic material, or with the material combination of the semi-finished product using a non-metallic material and a metal material, whose produced exterior skin product is a hybrid material, wherein the planking can also be molded and joined through further processing.

4. The aircraft fuselage of claim 3, wherein the planking exhibits a fire-safe(r) behavior, adjusted to the outer contour of the exterior skin (2).

5. The aircraft fuselage of one of claims 3 and 4, wherein the planking is realized with a GLARE material.

6. The aircraft fuselage of one of claims 3 to 5, wherein the exterior skin (2) is realized with a material comprised of an aluminum or aluminum alloy, joined to the burn-through resistant, plate-like planking.

## Patentansprüche

1. Flugzeugrumpf, dessen Rumpfstruktur neben anderen Strukturelementen, die alle Bauteile des Festigkeitsverbandes des Rumpfes sind und an dessen Kräfteaufnahmen beteiligt sind, aufweist:
eine Außenhaut (2), die aus jeweils unterschiedlichen Werkstoffen besteht, die derart ausgeführt sind, dass sie gegenüber Schubbeanspruchung beständig sind, und die als ein tragendes Element in den Festigkeitsverband eingebunden ist sind, um die auf sie einwirkenden Kräfte und Momente zu übertragen und aufzunehmen, wobei die Außenhaut (2) sich durch weitere Bearbeitungsschritte umformen und fügen lässt,
wobei die Außenhaut (2) aus einem Hybridwerkstoff gefertigt ist,
wobei der Hybridwerkstoff aus einem Verbundwerkstoff und einem metallischen Werkstoff besteht,
wobei der metallische Werkstoff aus Aluminium, Titan, einer Aluminiumlegierung oder einer Titanlegierung besteht,
wobei der Verbundwerkstoff und der metallische Werkstoff mit einer Harzschicht beschichtet oder in Harz getränkt sind, um den Hybridwerkstoff zu bilden;
wobei der Hybridwerkstoff in einer Sandwichbauweise gebildet ist,
wobei der metallische Werkstoff und der Verbundwerkstoff in Schichten zu der Sandwichbauweise miteinander verklebt sind;
wobei die Sandwichbauweise eingerichtet ist, ein durchbrandsicheres Verhalten der Außenhaut gegenüber einer dauerhaften Einwirkung von Flammen eines Feuers zu ergeben;
wobei der Verbundwerkstoff aus einem hitzebeständigem Verbundwerkstoff besteht,
wobei der hitzebeständige Verbundwerkstoff eine Temperaturbeständigkeit und Zugfestigkeit aufweist; und
wobei der hitzebeständige Verbundwerkstoff aus Kohlenstofffasern, die mit einer Nitrid- oder einer Karbid-Verbindung beschichtet sind, und einem metallischen oder keramischen Werkstoff besteht, in den die beschichteten Kohlenstofffasern eingebettet sind.

2. Flugzeugrumpf nach Anspruch 1, wobei der feuerbeständige, metallische Werkstoff aus Titan oder einer Titanlegierung gefertigt ist.

3. Flugzeugrumpf nach Anspruch 1, wobei die äußere Oberfläche der Außenhaut (2), die den auf die Außenumgebung eines Flugzeugs einwirkenden Witterungsbedingungen ausgesetzt ist, mit einer plattenähnlichen Beplankung (5) verbunden ist, die in einem durchbrandsicheren Halbzeug aus einem nicht-metallischen Werkstoff oder aus einem feuerfesten metallischen Werkstoff ausgeführt ist, oder die in der Werkstoffkombination des Halbzeugs, das aus einem nicht-metallischen und einem metallischen Werkstoff besteht, ausgeführt ist, deren hergestelltes Außenhaut-Produkt ein Hybridwerkstoff ist, wobei sich die Beplankung durch weitere Bearbeitungsschritte auch umformen und fügen lässt.

4. Flugzeugrumpf nach Anspruch 3, wobei die Beplankung, die der äußeren Kontur der Außenhaut (2) angepasst ist, ein feuersicheres (feuersichereres) Verhalten aufweist.

5. Flugzeugrumpf nach einem der Ansprüche 3 oder 4, wobei die Beplankung mit einem GLARE-Werkstoff verwirklicht ist.

6. Flugzeugrumpf nach einem der Ansprüche 3 bis 5, wobei die Außenhaut (2) aus einem Werkstoff verwirklicht ist, der Aluminium oder eine Aluminiumlegierung aufweist und der mit der durchbrandsicheren plattenähnlichen Beplankung verbunden ist.

## Revendications

1. Fuselage d'avion dont la structure de fuselage, en plus d'autres éléments structurels qui sont des composants de renfort de résistance mécanique du fuselage et qui aident à absorber ses forces, comportant :
un revêtement extérieur (2) constitué de différents matériaux respectifs, qui sont conçus pour être résistants au cisaillement, et incorporé comme un élément porteur dans le renfort de résistance mécanique pour absorber et transférer les forces et les couples agissant sur celui-ci, le revêtement extérieur (2) étant adapté pour être moulé et assemblé par l'intermédiaire d'un traitement ultérieur,
le revêtement extérieur (2) étant formé d'un matériau hybride,
le matériau hybride étant constitué d'un matériau composite et d'un matériau métallique,
le matériau métallique étant constitué d'aluminium ou de titane ou d'un alliage d'aluminium ou de titane,
le matériau composite et le matériau métallique étant revêtus d'une couche de résine ou enrobés d'une résine pour produire le matériau hybride,
le matériau hybride ayant une conception stratifiée,
le matériau métallique et le matériau composite étant liés de manière adhésive en couches suivant la conception stratifiée,
la conception stratifiée étant adaptée pour produire un comportement anti-brûlure perforante du revêtement extérieur en cas d'exposition à long terme à des flammes d'incendie,
le matériau composite étant constitué d'un matériau composite résistant à la chaleur,
le matériau composite résistant à la chaleur étant adapté pour présenter une résistance à la température et une résistance à la traction, et .
le matériau composite résistant à chaleur étant constitué de fibres de carbone, qui sont revêtues d'un liant nitrure ou carbure, et d'un métal ou d'une céramique, dans lequel les fibres de carbone revêtues sont noyées.

2. Fuselage d'avion selon la revendication 1, dans lequel le matériau métallique résistant au feu est constitué de titane ou d'un alliage de titane.

3. Fuselage d'avion selon la revendication 1, dans lequel la surface extérieure du revêtement extérieur (2), qui est exposée aux intempéries de l'environnement extérieur d'un avion, est assemblée avec un bordage analogue à une plaque (5), qui est réalisé à l'aide d'un produit semi-fini résistant à la brûlure perforante utilisant un matériau non métallique ou un matériau métallique résistant au feu, ou à l'aide de la combinaison de matériaux du produit semi-fini utilisant un matériau non métallique et un matériau métallique, dont le produit de revêtement extérieur fabriqué est un matériau hybride, le bordage pouvant être également moulé et assemblé par l'intermédiaire d'un traitement ultérieur.

4. Fuselage d'avion selon la revendication 3, dans lequel le bordage présente un comportement au feu (plus) sûr, ajusté au contour extérieur du revêtement extérieur (2).

5. Fuselage d'avion selon l'une des revendications 3 et 4, dans lequel le bordage est réalisé avec un matériau antireflet.

6. Fuselage d'avion selon l'une des revendications 3 à 5, dans lequel le revêtement extérieur (2) est réalisé avec un matériau constitué d'aluminium ou d'un alliage d'aluminium, assemblé avec le bordage analogue à une plaque, résistant à la brûlure perforante.
